(19) **Europäisches Patentamt / European Patent Office / Office européen des brevets**

(11) **EP 3 557 444 A1**

(12) # EUROPEAN PATENT APPLICATION
published in accordance with Art. 153(4) EPC

(43) Date of publication:
**23.10.2019 Bulletin 2019/43**

(21) Application number: **16924362.3**

(22) Date of filing: **19.12.2016**

(51) Int Cl.:
**G06F 17/15** [(2006.01)]

(86) International application number:
**PCT/CN2016/110735**

(87) International publication number:
**WO 2018/112692 (28.06.2018 Gazette 2018/26)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **Shanghai Cambricon Information Technology Co., Ltd**
**Beijing (CN)**

(72) Inventors:
• **CHEN, Tianshi**
  **Shanghai 201203 (CN)**

• **HAO, Yifan**
  **Shanghai 201203 (CN)**
• **LIU, Shaoli**
  **Shanghai 201203 (CN)**
• **CHEN, Yunji**
  **Shanghai 201203 (CN)**
• **LI, Zhen**
  **Shanghai 201203 (CN)**

(74) Representative: **AWA Sweden AB**
**P.O. Box 5117**
**200 71 Malmö (SE)**

(54) **DEVICE AND METHOD FOR OBTAINING FUNCTIONAL VALUE, AND NEURAL NETWORK DEVICE**

(57) The present disclosure provides a device and a method for acquiring a function value, the device comprising: an I/O module configured to input data and output piecewisely interpolated data; a storage module configured to store an interpolation function and a function interpolation table; a look-up module configured to search the function interpolation table for a corresponding parameter value based on a value of the data; and a calculation module configured to perform a basic operation on the data based on the interpolation function and the parameter value, and calculate the interpolated function value. When finding the function value, the device simply needs to select a corresponding parameter from the function interpolation table and perform a basic operation with respect to a range of variable values. Therefore, the present disclosure simplifies the hardware design, improves the operation speed, and reduces the ratio of area to power consumption of the chip.

FIG. 1

**Description**

**TECHNICAL FIELD**

The disclosure belongs to the field of computers, specifically relates to a device for acquiring a function value which is acquired by using a piecewise interpolation method, a method for acquiring a function value, and a neural network device.

**BACKGROUND**

An arithmetic logic unit (ALU) is a structure that performs integer operations. In computers, ALUs are digital circuits that specifically perform arithmetic and logic operations. The ALU is the most important part of a central processor in the computer, and even a micro-processor contains the ALU for the counting function. Powerful and complex ALUs are already present in modern CPU (Central Processing Unit) and GPU (Graphics Processing Unit); a single element may also contain ALU. Most ALUs can achieve the following operations: integer arithmetic operations (addition, subtraction, multiplication, and division), bit logic operations (AND, OR, NOT, and XOR), shift operations (moving data to the left or right or floating a particular bit, moving 1 bit is equivalent to multiplying by 2 or dividing by 2). Generally, the arithmetic logic unit only contains a linear operational means. When the arithmetic logic unit performs complex power operations and the like, it usually requires several operation cycles.

In order to speed up the operation speed of the processor, a FPU (Floating-Point Unit) is usually integrated in the CPU and the GPU. The FPU is a processor dedicated to floating-point operations and may support the calculation of some transcendental functions, for example log(x).

In the prior art, when calculating the complex functions such as various non-linear functions, it is generally to disassemble complex operations into simple operations, and then obtain a result after several operation cycles, which results in a low operation speed, a large area of the operational device and a high power consumption.

**SUMMARY**

It is an object of the present disclosure to provide a device and method for acquiring a function value and a neural network device.

(II) Technical Solution

According to an aspect of the present disclosure, there is provided a device for acquiring a function value by use of piecewise interpolation, comprising: an I/O module configured to input data and output piecewisely interpolated data; a storage module configured to store an interpolation function and a function interpolation table; a look-up module configured to search the function interpolation table for a corresponding parameter value based on a value of the data; and a calculation module configured to perform a basic operation on the data based on the interpolation function and the parameter value, and calculate the interpolated function value.

Further, the interpolation function is a linear interpolation function or a polynomial interpolation function.

Further, the function interpolation table contains parameters of the interpolation function.

According to another aspect of the present disclosure, there is provided a method for acquiring a function value by use of piecewise interpolation based on input data, comprising the following steps: S1: inputting data as an independent variable, then proceeding to step S2; S2: dividing a value range of the independent variable into N large intervals $A_1$, $A_2$, ..., $A_N$ in advance, dividing each of the large intervals into M small intervals evenly, obtaining $i$ such that the independent variable falls within the large interval $A_i$, and initializing a loop flag variable $p$ into 0, then proceeding to step S3, N and M being natural number; S3: storing N segments of interpolation tables, and looking up for a parameter value corresponding to the $p^{th}$ segment interpolation table, then proceeding to step S4; S4: calculating a interpolation function value corresponding to the independent variable based on the independent variable and the parameter value in step S3, letting the loop flag variable $p = p + 1$, and then determining the value of $p$, if $p < i$, then proceeding to step S5, otherwise proceeding to step S6; S5: passing the calculation result, then proceeding to step S3; S6: passing the calculation result to an I/O module, then proceeding to step S7; and S7: outputting the result through the I/O module.

Further, in step S2, the N large intervals are equal or unequal in length.

Further, the function interpolation table contains parameters of the interpolation function.

Further, the interpolation function is a linear interpolation function or a polynomial interpolation function.

According to still another aspect of the present disclosure, there is provided a neural network device for calculating, by piecewise interpolation, a value of an activation function that takes an inner product of a neuron input value and a weight value as independent variable, the neural network device comprising: a memory configured to store executable instructions; and a processor configured to execute the executable instructions stored in the memory so as to perform the following operation steps: I: inputting data as an independent variable, then proceeding to step II; II: dividing a value range of the independent variable into N large intervals $A_1$, $A_2$, ..., $A_N$ in advance, dividing each of the large intervals into M small intervals evenly, obtaining $i$ such that the independent variable falls within the large interval $A_i$, and initializing a loop flag variable $p$ into 0, then proceeding to step III, N and M being natural number; III: loading $p^{th}$ segment interpolation table for lookup based on N segments of interpolation tables stored in the memory, and looking up for a corresponding parameter value in a function interpolation table based on the independent variable, then proceeding to step IV; IV: calculating a corresponding interpolation function value based on the parameter value and the independent variable, letting the loop flag variable $p = p + 1$, and then determining the value of $p$, if $p < i$, then proceeding to step III, otherwise proceeding to step V; and V: outputting the interpolation function value.

Further, the processor comprises a CPU or GPU, or a dedicated neural network processor.

Further, the activation function is a hyperbolic tangent function or a Sigmoid function.

The present disclosure piecewisely fits complex functions into simple interpolation functions according to data range. In finding the function value, with respect to a range of variable values, it is simply needed to select a corresponding parameter from a function interpolation table and perform basic operations. Therefore, the present disclosure simplifies the hardware design, improves the operation speed, and reduces the ratio of area to power consumption of the chip; solves such problems as complicated hardware structure, slow operation speed, and high ratio of area to power consumption of the operational device when calculating complex functions in the prior art.

## BRIEF DESCRIPTION OF THE DRAWINGS

Fig. 1 is a block diagram illustrating an example of an overall configuration of a device for piecewise interpolation according to an embodiment of the present disclosure;

Fig. 2 is a flow chart of a method for piecewise interpolation according to an embodiment of the present disclosure;

Fig. 3 is a schematic diagram of a hardware basic circuit and data transmission for piecewise interpolation according to an embodiment of the present disclosure;

Fig. 4 is a schematic diagram of interpolation effect of linear piecewise interpolation performed on an exponential function exp(x) in a fixed interval according to an embodiment of the present disclosure; and

Fig. 5 is a block diagram illustrating a configuration of a neural network device according to an embodiment of the present disclosure.

## DETAILED DESCRIPTION

In order to make the object, technical solution and advantages of the present disclosure more clear, the present disclosure will be further described in detail below with reference to the accompanying drawings in conjunction with specific embodiments thereof. By describing in detail below, other aspects, advantages, and prominent features of the present disclosure will become apparent to those skilled in the art.

In the present specification, the following embodiments for describing the principles of the present disclosure are merely illustrative and should not be construed in any way as limiting the scope of the disclosure. The following description with reference to the drawings is provided to assist in a comprehensive understanding of the exemplary embodiments of the present disclosure as defined by the claims and their equivalents. The following description includes various specific details to assist in understanding but these details should be merely regarded as exemplary details. Therefore, those of ordinary skill in the art should realize that various changes and modifications of the embodiments described herein can be made without departing from the scope and spirit of the present disclosure. In addition, description of well-known functions and structures is omitted for clarity and conciseness. Moreover, the same reference numerals are used for similar functions and operations throughout the drawings.

According to an aspect of an embodiment of the present disclosure, there is provided a device for acquiring a function value, which can piecewisely fit complex functions into simple linear functions according to a data range. When determining the function value, a look-up module loads an interpolation table in a storage module, looks up the corresponding slope and intercept according to a range of independent variable values, and performs basic operations (that is, addition and multiplication operations). According to the independent variable falling within which one of large intervals, the above process is performed cyclically, and finally an interpolation result is obtained, that is, the function value is approximately obtained. Therefore, the present disclosure simplifies the hardware design, increases the operation speed, and reduces the ratio of area to power consumption of the chip.

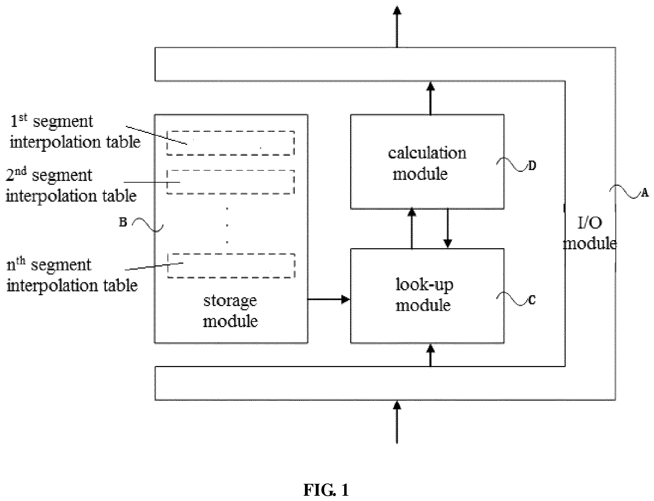

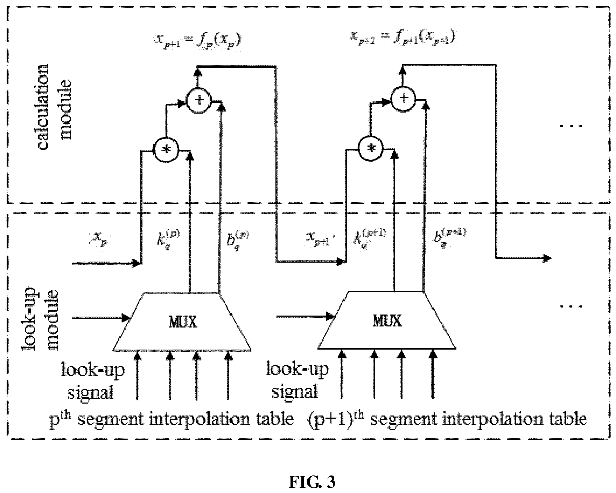

Fig. 1 is a block diagram illustrating an example of the overall configuration of a device for linear piecewise interpolation according to an embodiment of the present disclosure. As shown in FIG. 1, the device includes an I/O module A, a look-up module C, a storage module B, and a calculation module D. As shown in Fig. 3, all these modules can be implemented by hardware circuits.

The I/O module A, i.e., the input and output module, is used to input data (independent variable) $x_1$ and pass it to the look-up module C, and used to receive the final calculation result $y$ from the calculation module D and output this result. Here, $x_1$ not only can be directly raw data, but also can be preprocessed data of raw data $x_0$. However, such preprocessing process is not mentioned for simplicity of description.

In the storage module B, interpolation functions $f_1, f_2, ..., f_N$ necessary for the calculation process are stored, wherein $f_p$ corresponds to the p$^{th}$ segment interpolation function. The data range is divided into $N$ large intervals $A_1, A_2, ..., A_N$ in advance, and the left and right endpoints of the large interval $A_p$ are represented by $A_p$ and sup $A_p$ respectively. Each large interval $A_p$ is further divided into M small intervals $a_1^{(p)}, a_2^{(p)}, ..., a_M^{(p)}$ $f_p$ is defined as follows.

$$f_p(x) = \begin{cases} k_q^{(p)}x + b_q^{(p)} & \text{if } x \in a_q^{(p)}, q = 1, 2, ..., M \\ k_{M+1}^{(p)}x + b_{M+1}^{(p)} & \text{if } x > \sup A_p \\ k_{M+2}^{(p)}x + b_{M+2}^{(p)} & \text{if } x < \inf A_p \end{cases}$$

This module stores all the slopes $k_q^{(p)}$ and intercepts $b_q^{(p)}$, wherein $p = 1, 2, ..., N$, $q = 1, 2, ..., M + 2$. The value of $M$ is determined depending on the data accuracy. The larger the value of M is, the higher the accuracy is, that is, the function value approximated by the interpolation result is closer to the true value.

In the look-up module C, the data range is divided into $N$ large intervals $A_1, A_2, ..., A_N$ in advance. First, $i$ is obtained, such that the independent variable $x_1$ falls within $A_i$. After that, the p$^{th}$ segment interpolation table stored in the storage module is sequentially loaded, wherein $1 \leq p \leq i-1$. As for the independent variable $x_p$ for the p$^{th}$ look-up, the corresponding slope $k_q^{(p)}$ and intercept $b_q^{(p)}$ are looked up, and are uploaded into the calculation module D together with the independent variable $x_p$. Thereafter, the look-up module C receives the calculation result $x_{p+1}$ obtained from the calculation module D as an independent variable, thereby performing the p+1$^{th}$ look-up. Finally, the i$^{th}$ segment interpolation table stored in the storage module is loaded, thereby performing the last look-up.

In calculation module D, the independent variable $x_p$, the slope $k_q^{(p)}$ and the intercept $b_q^{(p)}$ obtained from the look-up module are received, and thus $x_{p+1} = f_p(x_p) = k_q^{(p)}x_p + b_q^{(p)}$ is calculated. If $1 \leq p \leq i - 1$, the calculation result $x_{p+1}$ is passed to the look-up module C for the next look-up. And if $p = i$, the calculation result $x_{i+1}$ is passed to the I/O module as the final output result $y$, i.e., $y = x_{i+1}$.

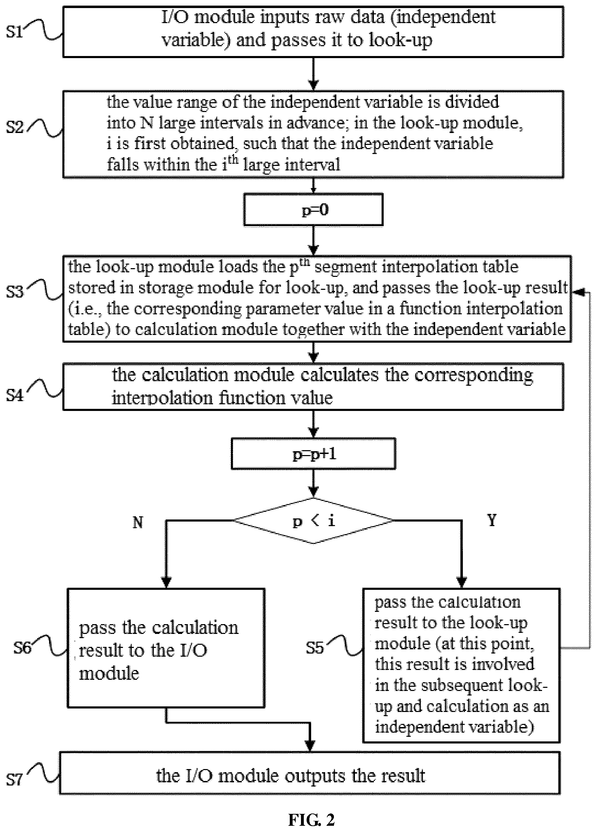

According to another aspect of the present disclosure, there is provided a flowchart illustrating a method for acquiring a function value. Fig. 2 is a flowchart of performing piecewise interpolation according to an embodiment of the present disclosure. This method is applicable to the above described device. The flow of specific data transmission is shown in Fig. 3.

In S1, the I/O module A inputs data $x_1$ (independent variable), and passes it to the look-up module C. The flow then goes to S2;

in S2, in the look-up module C, $i$ is first obtained such that the independent variable $x_1$ falls within the large interval $A_i$. A loop flag variable $p$ is initialized, $p = 0$. The flow then goes to S3;

in S3, N segments of interpolation tables are stored in the storage module B. The look-up module C loads the p$^{th}$ segment interpolation table stored in the storage module B for look-up, and passes the look-up result (i.e., the corresponding slope $k_q^{(p)}$ and intercept $b_q^{(p)}$ in the function interpolation table) to the calculation module D together with the independent variable $x_p$. The flow then goes to S4;

in S4, the calculation module D calculates the corresponding interpolation function value:

$$x_{p+1} = f_p(x_p) = k_q^{(p)} x_p + b_q^{(p)}$$

then the loop flag variable is $p = p + 1$, and the value of $p$ is determined: if $p < i$, the flow goes to S5, otherwise the flow goes to S6;

in S5, the calculation result $x_{p+1}$ is passed to the look-up module C (at this point, this result is involved in the subsequent look-up and calculation as independent variable), and the flow then goes to S3;

in S6, the calculation result $x_{i+1}$ is passed to the I/O module A, and the flow then goes to S7;

in S7, the I/O module A outputs the result $y = x_{i+1}$.

Of course, the interpolation function in the above method is not limited to a linear function, but also may be a polynomial interpolation, as long as it is a function that converts complex functions into simple operations by interpolation, including but not limited to a linear function and a polynomial function.

The following description is made by exemplifying the specific embodiments.

**First Embodiment**

A linear piecewise interpolation is performed on a function $F(x) = \exp(x)$ in [0,18].

First, the data range is divided into three large intervals (i.e., N=3), $A_1 = [0,10)$, $A_2 = [10,15)$, and $A_3 = [15,18]$. It should be noted that these three large intervals are not evenly divided, as the larger the value of independent variable is, the larger the derivative function of the curve is, in other words, the steeper the curve is. And in order to ensure the fineness of the approximation, intervals at the steep portion of the curve are smaller, while intervals at the gentle portion of the curve need not to be small. Each of the large intervals is further evenly divided into ten small intervals

$$a_1^{(1)}, a_2^{(1)}, ..., a_{10}^{(1)}, ..., a_1^{(2)}, a_2^{(2)}, ..., a_{10}^{(2)}, ..., a_1^{(3)}, a_2^{(3)}, ..., a_{10}^{(3)} \quad , \quad \text{for} \quad \text{example} \quad a_1^{(1)} = [0,1) \quad ,$$

$$a_1^{(3)} = [15, 15.3)$$
.

Then, the interpolation functions $f_1(x), f_2(x), f_3(x)$ are defined as follows.

$$f_1(x) = \begin{cases} k_q^{(1)} x + b_q^{(1)} & \text{if } x \in a_q^{(1)}, q = 1, 2, ..., 10 \\ x & \text{else} \end{cases}$$

$$f_2(x) = \begin{cases} k_q^{(2)} x + b_q^{(2)} & \text{if } x \in a_q^{(2)}, q = 1, 2, ..., 10 \\ x & \text{else} \end{cases}$$

$$f_1(x) = \begin{cases} k_q^{(3)} x + b_q^{(3)} & \text{if } x \in a_q^{(3)}, q = 1, 2, ..., 10 \\ x & \text{else} \end{cases}$$

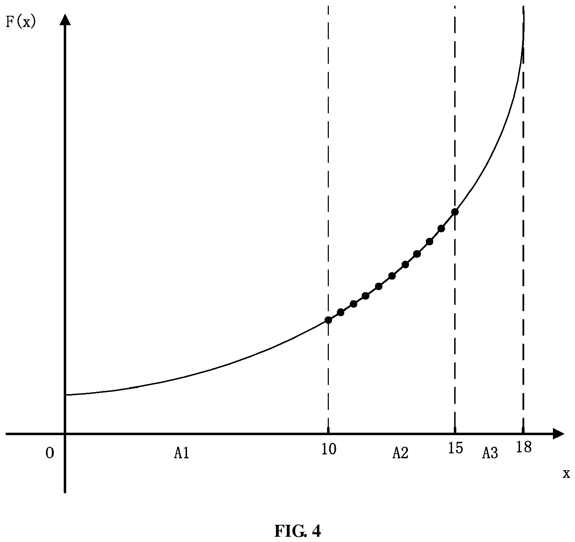

wherein values of slope $k_q^{(p)}$ and intercept $b_q^{(p)}$ are taken so that the value of $f_p(x)$ equals to the value of $F(x) = \exp(x)$ on the left and right endpoints of the interval $a_q^{(p)}$. For example, the interpolation effect on the large interval $A_2$ is shown in Fig. 4.

Finally, as for a given independent variable $x_1$, the above method steps as shown in Fig. 2 are sequentially performed.

**Second Embodiment**

For neural networks applied to image classification, a linear piecewise interpolation is performed on an activation function $F(x) = \text{sigmoid}(x)$ in [0,255] (image grayscale range).

First, the data range is divided into eight large intervals (i.e., N=8), $A_1 = [0,10)$ [0,31), $A_2 = [32,63)$, $A_3 = $

[64,95), ..., $A_8$=[224, 255]. It should be noted that these eight large intervals are not evenly divided, as the larger the value of independent variable is, the larger the derivative function of the curve is, in other words, the steeper the curve is. And in order to ensure the fineness of the approximation, intervals at the steep portion of the curve are smaller, while intervals at the gentle portion of the curve need not to be small. Each of the large intervals is further evenly divided into 32 or 64 small intervals (other number of small intervals is also possible, depending on the required accuracy). The interpolation function is similar to that in the first embodiment, wherein the values of slope $k_q^{(p)}$ and intercept $b_q^{(p)}$ are taken so that the value of $f_p(x)$ equals to the value of $F(x)$ = sigmoid(x) on the left and right endpoints of the interval $a_q^{(p)}$.

Finally, as for a given independent variable $x_1$, the above method steps are sequentially performed.

Based on the same inventive concept, the present disclosure also provides a dedicated neural network device that calculates an activation function in a feedforward operation of an artificial neural network by using piecewise interpolation, wherein in the activation function, an inner product of a neuron input value and a weight value is taken as independent variables.

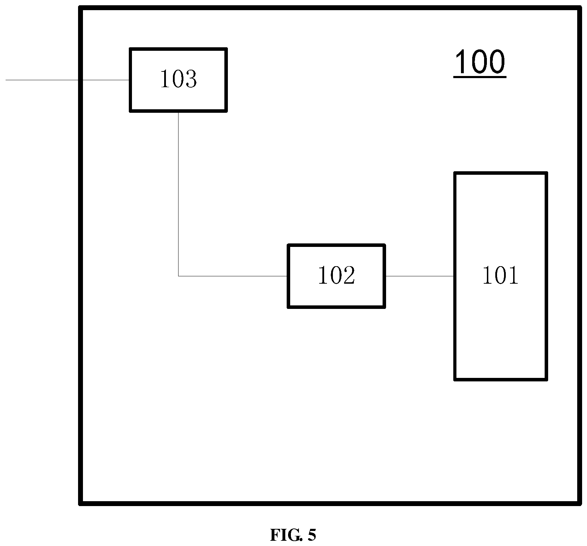

Fig. 5 is a block diagram illustrating a configuration of a neural network device according to an embodiment of the present disclosure. The neural network device 100, which calculates the value of an activation function in which an inner product of a neuron input value and a weight value is taken as independent variables by using piecewise interpolation, comprises:

a memory 101 configured to store executable instructions;
a processor 102 configured to execute the executable instructions stored in the memory so as to perform the following operation steps:

(I) input data as an independent variable, then it goes to step II;
(II) divide the value range of the independent variable into N large intervals $A_1, A_2, .., A_N$ in advance, and evenly divide each of the large intervals into M small intervals (N and M being natural numbers), obtain $i$ such that the independent variable falls within the large interval $A_i$, and initialize a loop flag variable $p$, i.e., $p = 0$, then it goes to step III;
(III) load the $p^{th}$ segment interpolation table for look-up based on N segments of interpolation tables stored in the memory, and look up the corresponding parameter value in the function interpolation table based on the independent variable, then it goes to step IV;
(IV) calculate the value of the corresponding interpolation function according to the parameter value and the independent variable, the loop flag variable is set to $p = p + 1$, and determine the value of $p$, if $p < i$, it goes to step III, otherwise it goes to step V;
(V) output the value of the interpolation function.

The processor may include a general purpose microprocessor, an instruction set processor, and/or related chipset and/or a special purpose microprocessor (e.g., an application specific integrated circuit (ASIC)). The processor may also include an onboard memory for buffer purposes. Preferably, a dedicated neural network processor is employed.

The processor is a single processing unit (e.g., a CPU or GPU) or multiple processing units used for executing different actions of the flow described in this embodiment.

The operation steps may be executed with reference to the flowchart described in Fig. 2 illustrating a method of piecewise interpolation. The activation function is a hyperbolic tangent function or a Sigmoid function.

The device of this embodiment may also comprises an input and output unit 103 configured to input raw data or preprocessed data, and output a function value subjected to the interpolation operation.

The object, technical solution and beneficial effects of the present disclosure are further described in detail based on the above specific embodiments. It should be understood that the forgoing description is merely specific embodiments of the present disclosure, and is not intended to limit the present disclosure. All modifications, equivalent substitutions, improvements, etc., made within the spirit and scope of the present disclosure should be included within the scope of the present disclosure.

**Claims**

1.   A device for acquiring a function value by use of piecewise interpolation, comprising:

an I/O module configured to input data and output piecewisely interpolated data;

a storage module configured to store an interpolation function and a function interpolation table;

a look-up module configured to search the function interpolation table for a corresponding parameter value based on a value of the data; and

a calculation module configured to perform a basic operation on the data based on the interpolation function and the parameter value, and calculate the interpolated function value.

2. The device according to claim 1, wherein the interpolation function is a linear interpolation function or a polynomial interpolation function.

3. The device according to claim 1, wherein the function interpolation table contains parameters of the interpolation function.

4. A method for acquiring a function value by use of piecewise interpolation based on input data, comprising the following steps:

S1: inputting data as an independent variable, then proceeding to step S2;

S2: dividing a value range of the independent variable into N large intervals $A_1, A_2, ..., A_N$ in advance, dividing each of the large intervals into M small intervals evenly, obtaining $i$ such that the independent variable falls within the large interval $A_i$, and initializing a loop flag variable $p$ into 0, then proceeding to step S3, N and M being natural number;

S3: storing N segments of interpolation tables, and looking up for a parameter value corresponding to the $p^{th}$ segment interpolation table, then proceeding to step S4;

S4: calculating a interpolation function value corresponding to the independent variable based on the independent variable and the parameter value in step S3, letting the loop flag variable $p = p + 1$, and then determining the value of $p$, if $p < i$, then proceeding to step S5, otherwise proceeding to step S6;

S5: passing the calculation result, then proceeding to step S3;

S6: passing the calculation result to an I/O module, then proceeding to step S7; and

S7: outputting the result through the I/O module.

5. The method according to claim 4, wherein in step S2, the N large intervals are equal or unequal in length.

6. The method according to claim 4, wherein the function interpolation table contains parameters of the interpolation function.

7. The method according to claim 4, wherein the interpolation function is a linear interpolation function or a polynomial interpolation function.

8. A neural network device for calculating, by piecewise interpolation, a value of an activation function that takes an inner product of a neuron input value and a weight value as independent variable, the neural network device comprising:

a memory configured to store executable instructions; and

a processor configured to execute the executable instructions stored in the memory so as to perform the following operation steps:

I: inputting data as an independent variable, then proceeding to step II;

II: dividing a value range of the independent variable into N large intervals $A_1, A_2, ..., A_N$ in advance, dividing each of the large intervals into M small intervals evenly, obtaining $i$ such that the independent variable falls within the large interval $A_i$, and initializing a loop flag variable $p$ into 0, then proceeding to step III, N and M being natural number;

III: loading $p^{th}$ segment interpolation table for lookup based on N segments of interpolation tables stored in the memory, and looking up for a corresponding parameter value in a function interpolation table based on the independent variable, then proceeding to step IV;

IV: calculating a corresponding interpolation function value based on the parameter value and the independent variable, letting the loop flag variable $p = p + 1$, and then determining the value of $p$, if $p < i$, then proceeding to step III, otherwise proceeding to step V; and

V: outputting the interpolation function value.

9. The neural network device according to claim 8, wherein the processor comprises a CPU or GPU, or a dedicated neural network processor.

10. The neural network device according to claim 8, wherein the activation function is a hyperbolic tangent function or a Sigmoid function.

1st segment
interpolation table

2nd segment
interpolation table

B

nth segment
interpolation table

storage
module

calculation
module

D

look-up
module

C

I/O
module

A

FIG. 1

S1 — I/O module inputs raw data (independent variable) and passes it to look-up

S2 — the value range of the independent variable is divided into N large intervals in advance; in the look-up module, i is first obtained, such that the independent variable falls within the $i^{th}$ large interval

$p=0$

S3 — the look-up module loads the $p^{th}$ segment interpolation table stored in storage module for look-up, and passes the look-up result (i.e., the corresponding parameter value in a function interpolation table) to calculation module together with the independent variable

S4 — the calculation module calculates the corresponding interpolation function value

$p=p+1$

$p < i$

N

Y

S6 — pass the calculation result to the I/O module

S5 — pass the calculation result to the look-up module (at this point, this result is involved in the subsequent look-up and calculation as an independent variable)

S7 — the I/O module outputs the result

FIG. 2

$$x_{p+1} = f_p(x_p) \qquad x_{p+2} = f_{p+1}(x_{p+1})$$

calculation module

look-up module

$x_p \qquad k_q^{(p)} \qquad b_q^{(p)} \qquad x_{p+1} \qquad k_q^{(p+1)} \qquad b_q^{(p+1)}$

MUX

MUX

look-up signal

look-up signal

$p^{th}$ segment interpolation table $\quad$ $(p+1)^{th}$ segment interpolation table

**FIG. 3**

**FIG. 4**

FIG. 5

# INTERNATIONAL SEARCH REPORT

| International application No. |
| --- |
| PCT/CN2016/110735 |

## A. CLASSIFICATION OF SUBJECT MATTER

G06F 17/15 (2006.01) i

According to International Patent Classification (IPC) or to both national classification and IPC

## B. FIELDS SEARCHED

Minimum documentation searched (classification system followed by classification symbols)

G06F, G11B

Documentation searched other than minimum documentation to the extent that such documents are included in the fields searched

Electronic data base consulted during the international search (name of data base and, where practicable, search terms used)

EPODOC, WPI, CNPAT, CNKI, IEEE, GOOGLE: 函数, 插值, 线性, 分段, 导数, 阶梯, 神经, 激励, 双曲正切, 循环, 递归, function, value, subsection, linear+, ladder, nerve, circulate, sigmoid

## C. DOCUMENTS CONSIDERED TO BE RELEVANT

| Category* | Citation of document, with indication, where appropriate, of the relevant passages | Relevant to claim No. |
| --- | --- | --- |
| X | CN 105468335 A (INSTITUTE OF COMPUTING TECHNOLOGY, CHINESE ACADEMY OF SCIENCES) 06 April 2016 (06.04.2016), description, paragraphs [0014]-[0020], [0110] and [0111] | 1-3 |
| A | CN 1305612 A (NIIGATA SEIMITSU CO., LTD. et al.) 25 July 2001 (25.07.2001), entire document | 1-10 |
| A | CN 101266463 A (JIANGNAN UNIVERSITY) 17 September 2008 (17.09.2008), entire document | 1-10 |
| A | US 2012303562 A1 (HITACHI GLOBAL STORAGE TECHNOLOGIES NETHERLANDS B. V.) 29 November 2012 (29.11.2012), entire document | 1-10 |

☐ Further documents are listed in the continuation of Box C.  ☒ See patent family annex.

| | |
| --- | --- |
| *    Special categories of cited documents: | "T"  later document published after the international filing date or priority date and not in conflict with the application but cited to understand the principle or theory underlying the invention |
| "A"  document defining the general state of the art which is not considered to be of particular relevance | |
| "E"  earlier application or patent but published on or after the international filing date | "X"  document of particular relevance; the claimed invention cannot be considered novel or cannot be considered to involve an inventive step when the document is taken alone |
| "L"  document which may throw doubts on priority claim(s) or which is cited to establish the publication date of another citation or other special reason (as specified) | "Y"  document of particular relevance; the claimed invention cannot be considered to involve an inventive step when the document is combined with one or more other such documents, such combination being obvious to a person skilled in the art |
| "O"  document referring to an oral disclosure, use, exhibition or other means | |
| "P"  document published prior to the international filing date but later than the priority date claimed | "&" document member of the same patent family |

| Date of the actual completion of the international search | Date of mailing of the international search report |
| --- | --- |
| 12 July 2017 | 27 July 2017 |

| Name and mailing address of the ISA<br>State Intellectual Property Office of the P. R. China<br>No. 6, Xitucheng Road, Jimenqiao<br>Haidian District, Beijing 100088, China<br>Facsimile No. (86-10) 62019451 | Authorized officer<br><br>GAO, Minfang<br><br>Telephone No. (86-10) 82246811 |

Form PCT/ISA /210 (second sheet) (July 2009)

# INTERNATIONAL SEARCH REPORT
Information on patent family members

| | International application No. |
|---|---|
| | PCT/CN2016/110735 |

| Patent Documents referred in the Report | Publication Date | Patent Family | Publication Date |
|---|---|---|---|
| CN 105468335 A | 06 April 2016 | None | |
| CN 1305612 A | 25 July 2001 | US 6735608 B1 | 11 May 2004 |
| | | WO 9966424 A1 | 23 December 1999 |
| | | JP 2000010960 A | 14 January 2000 |
| | | TW 445419 B | 11 July 2001 |
| | | HK 1037257 A1 | 03 June 2005 |
| | | EP 1118946 A1 | 25 July 2001 |
| CN 101266463 A | 17 September 2008 | None | |
| US 2012303562 A1 | 29 November 2012 | CN 102800328 A | 28 November 2012 |

Form PCT/ISA/210 (patent family annex) (July 2009)